# EUROPÄISCHE PATENTANMELDUNG

(11) **EP 1 469 059 A2**
(43) Veröffentlichungstag der Anmeldung: **20.10.2004**
(21) Anmeldenummer: 04006761.3
(22) Anmeldetag: 20.03.2004
(51) Int. Cl.: C09K 21/14

(54) **Im Brandfall expandierende Schaumstoffe**

(30) Priorität: 14.04.2003 AT 5672003
(71) Anmelder: INTUMEX GmbH, A-4021 Linz (AT)
(72) Erfinder: Horacek, Heinrich, 4040 Linz (AT)
(74) Vertreter: Lindinger, Ingrid

(57) **Zusammenfassung**

Im Brandfall expandierende Weichschaumstoffe auf Basis von Styrol-Butadien, Polyvinylalkohol, Polyurethan oder Neopren, die sie als intumeszierende Komponente eine Kombination aus Phosphorsäureverbindung, Polyalkohol und Polyamid enthalten.

## Beschreibung

Die Erfindung betrifft Weichschaumstoffe, die aus einer Einkomponenten- oder Zweikomponentensprühdose, -pistole oder -kartusche ausgebracht werden und die im Brandfall ein zweites Mal expandieren.

Aus dem Stand der Technik sind Schaumstoffe bekannt, die geringe Mengen an intumeszierenden, d.h. unter Wärme und Feuereinwirkung expandierende Flammhemmer enthalten.
So sind beispielsweise in US 3,574,644 oder in GB 2 168 706 Weichschaumstoffe aus Polyurethan beschrieben, die Blähgraphit als Flammhemmer enthalten. Aus EP 1 127 908 sind weiters Hartschaumstoffe aus Polyurethan bekannt, die u.a. ebenfalls Blähgraphit als intumeszierende Komponente enthalten.
In all diesen Anwendungen bewirkt die Zugabe der intumeszierenden Verbindung eine Verbesserung des Brandverhaltens, es findet jedoch keine messbare zweite Expansion statt.

Aufgabe der vorliegenden Erfindung war es demnach Weichschaumstoffe zu finden, die, nachdem sie aus einer Einkomponenten- oder Zweikomponentensprühdose,-pistole oder -kartusche ausgebracht wurden, im Brandfall ein zweites Mal expandieren und somit eine Heißgasabdichtung bilden.

Unerwarteterweise konnte diese Aufgabe durch die Verwendung einer Kombination aus Phosphorsäureverbindung, Polyalkohol und Polyamiden als intumeszierende Komponente gelöst werden.

Gegenstand der vorliegenden Erfindung sind demnach im Brandfall expandierende Weichschaumstoffe auf Basis von Styrol - Butadien, Polyvinylalkohol, Polyurethan oder Neopren, die dadurch gekennzeichnet sind, dass sie als intumeszierende Komponente eine Kombination aus Phosphorsäureverbindung, Polyalkohol und Polyamiden enthalten.

Erfindungsgemäß werden Weichschaumstoffe auf Basis von Styrol-Butadien, Polyvinylalkohol, Polyurethan oder Neopren eingesetzt.

Bei den Styrol-Butadien-Schaumstoffen, Polyvinylalkoholschaumstoffen und Neoprenschaumstoffen handelt es sich um Schaumstoffe auf wässriger Basis, die aus Einkomponentensprühdosen, -pistolen oder -kartuschen ausgebracht werden.

Polyurethanschaumstoffe werden hingegen aus Zweikomponentenspühdosen, - pistolen oder -kartuschen ausgebracht, in der die Polyol-Komponente und die Polyisocyanatkomponente bis zum Ausbringen reaktionsinhibierend getrennt vorliegen.

Als Polyurethanschaumstoffe kommen solche in Frage die als Polyolkomponente (A) ein Polyol aus der Gruppe Polyethylenglykol, Polypropylenglykole, Polypropylenglykole mit Ethylenoxidendgruppen, Polyesterpolyole, Polybutadiene mit OH-Endgruppen, wie etwa Poly Bd von Fa. elf atochem oder halogenierte Polyetherpolyole, wie etwa Ixol B251 MI25 von Solvay, FOX-O-Pol VD280S von Resine Chemie, Polyole auf Phosphorsäureesterbasis wie Desmophen 4090N von Fa. Bayer, Umsetzungsprodukte aus 1mol Phodphorsäure bzw. Phosphoroxychlorid, 2mol an Diolen und 1 mol Dialkylamin, wie beispielsweise 2mol Ethylenglykol und 1mol Dimethylamin
und als Polyisocyanatkomponente (B) Polyisocyanate aus Diisocyanaten, wie etwa, Methylendiphenyldiisocyanate (MDI) in Form von Rein-MDI oder Roh-MDI, Tolylendiisocyanate (TDI), modifizierte MDI's und TDI's, Präpolymere von MDI und TDI, aliphatische Isocyanate, wie etwa 4,4'-Diisocyanatodicyclohexylmethan, Isophorondiisocyanat, Hexamethylendiisocyanat, 2,2,4(2,4,4)-Trimethylhexamethylendiisocyanat, hydriertes Toylendiisocyanat, Dimeryldiisocyanat, Lysindiisocyanat, trans-1,4-Cyclohexandiisocyanat, 1,4-Bis-iscocyanatomethylcyclohexan, Benzoldisulfonylisocyanat, Dibenzyoylisocyanat, Dihexylandiisocyanat 3,3'-Dimethyl-4,4'-diisocyanatdicyclohexylmethan, Tetramethylendiisocyanat, 2-Methylpenta-methylendiisocyanat, Xylylendiisocyuanat, u.s.w. enthalten.

Das Verhältnis der Komponente A zu Komponente B liegt dabei bevorzugt zwischen 100: 30 bis 100: 80.

Als intumeszierende Komponente enthalten die Schaumstoffe erfindungsgemäß eine Kombination aus Phosphorsäureverbindung, Polyalkohol und Polyamid.
Als Phosphorsäureverbindung eignen sich dabei Ammoniumpolyphosphat, Melaminphosphat, Ethylendiaminphosphat, Ammoniumdihydrogenphosphat, Aluminiumorthophosphat, Piperazinphosphat, Guanidinphosphat, Phosphorsäureesterpolyole oder Harnstoffphosphat.
Geeignete Polyalkohole sind Pentaerythrit, Dipentaerythrit, Polyethylenglykol und Polyole auf Phosphorsäureesterbasis.
Als Polyamide werden Melamin, Trihydrazinotriazin und Dicyanodiamid eingesetzt.
Die einzelnen Verbindungen können dabei in einer Menge von jeweils 5-50 Gew.%, bevorzugt von jeweils 10 - 40Gew.%, in Summe jedoch nicht mehr als 75Gew.%, bevorzugt nicht mehr als 65Gew.% zugesetzt werden.

Im Falle der Polyurethanschaumstoffe kann die Phosphorsäureverbindung Bestandteil der Polyolkomponente (A) sein, in dem Polyole auf Basis von Phosphorsäureestern eingesetzt werden.

Die intumeszierende Komponente wird mit den Edukten der Schaumstoffe, vermischt und sodann in eine entsprechende Einkomponenten- oder Zweikomponentensprühdose, -pistole oder -kartusche gefüllt. Im Falle der Polyurethanschaumstoffe wird die intumeszierende Komponente mit der Polyolkomponente (A) vermischt.

Als Einkomponentensprühdose, -pistole oder -kartusche, die für die Schaumstoffe auf wässriger Basis eingesetzt werden, kommen solche in Frage, die den Schaumstoff entweder mittels eines Treibmittels oder mit mechanischer Hilfe, beispielsweise mit einem Kolben ausbringen.
Für die Polyurethanschaumstoffe werden 2K-Kartuschen, -sprühdosen oder -pistolen mit Statikmischern eingesetzt.

Gegebenenfalls können den erfindungsgemäßen Schaumstoffen noch übliche Hilfsund Zusatzstoffe, wie etwa Emulgatoren, Schaumstabilisatoren, Trocknungsmittel, Farbpigmente, Katalysatoren, Lösungsmittel u.s.w. zugesetzt werden.

Die erfindungsgemäßen Schaumstoffe werden sodann direkt vor Ort in die zu verschließenden Stellen eingebracht und schäumen dort zu der gewünschten Brandabschottung auf.
Nach dem Austritt aus der verwendeten Dose, Pistole oder Kartusche weisen die erfindungsgemäßen Schaumstoffe ein Raumgewicht zwischen 25 und 550 g/l auf.

Im Brandfall expandieren die erfindungsgemäßen Schaumstoffe ein zweites Mal, wobei der 2. Expansionsfaktor (EF) zwischen 1,5 und 15 liegt.

Durch diese zweite Expansion eignen sich die erfindungsgemäßen Schaumstoffe hervorragend als Heißgasdichtung bzw. als wärmeisolierender Weichschott.
Zudem erzielen die erfindungsgemäßen nachexpandierenden Schaumstoffe eine deutlich höhere Brandwiderstandszeit als herkömmliche Schaumstoffe.

### Beispiel 1 Styrol-Butadien-Schaumstoff

Zur Herstellung eines Styrol-Butadien-Schaumstoffes wurden folgende Einsatzstoffe vermischt:

| Teile | Einsatzstoffe |
|---|---|
| 180 | Styrol-Butadien (Styrofan D422, Fa. BASF) |
| 6 | Emulgator (Rewopol B 1003, Fa. Degussa) |
| 0,5 | Silikonöl AK 350 (Fa. Wacker) |
| 80 | Ammoniumpolyphosphat (Exolit AP 422; Fa. Clariant) |
| 40 | Melamin (Fa. Agrolinz Melamin) |
| 40 | Dipentaerythrit (Fa. Perstorp) |
| Summe 346,5 Teile | |

300 Teile dieser Mischung wurden mit 100 Teilen Frigen 12 (Difluordichlormethan) als Treibmittel in eine Druckdose mit Ventil gefüllt und ergaben nach dem Verlassen der Dose einen Schaumstoff mit 80 g/l Raumgewicht.

### Beispiel 2: Polyurethanschaumstoff

Zur Herstellung eines Polyurethan-Schaumstoffes wurden folgende Einsatzstoffe vermischt:

| Teile | Einsatzstoffe |
|---|---|
| Polyolkomponente (A): | |
| 35,8 | Melamin (Fa. Agrolinz Melamin) |
| 37,3 | Polyethylenglykol (Pluriol E 600, Fa. BASF) |
| 21,6 | Polyol auf Phosphorsäureesterbasis (Desmophen 4090N, Fa. Bayer) |
| 4,7 | Zeolithpaste (Fa. Bayer) |
| 0,6 | Schaumstabilisator (Tegostab KS 6, Fa. Goldschmidt) |
| 3 | Rotpigment (Bayferrox 140, Fa. Bayer) |
| 0,2 | Dibutylzinnlaurat DBTL (Fa. Bayer) |

| Komponente (B) | |
|---|---|
| 45 | Methylendiphenyldiisocyanat (Caradate 30 ; ICI) |
| 148,2 | |

100 g A -Komponente und 43,6 g B- Komponente wurden getrennt in eine Pistole gefüllt und ergaben nach dem Verlassen des statischen Mischers einen Schaumstoff mit 500 g/l Raumgewicht.

### Beispiel 3: Polyurethanschaumstoff

Zur Herstellung eines Polyurethan-Schaumstoffes wurden folgende Einsatzstoffe vermischt:

| Teile | Einsatzstoffe |
|---|---|
| | Polyolkomponente (A) |
| 35,8 | Melamin (Fa. Agrolinz Melamin) |
| 37,3 | Polyethylenglykol (Pluriol E 600, Fa. BASF) |
| 21,6 | Polyol auf Phosphorsäureesterbasis (Desmophen 4090N, Fa. Bayer) |
| 2,0 | Wasser |
| 0,6 | Schaumstabilisator (Tegostab KS 6, Fa. Goldschmidt) |
| 3 | Rotpigment (Bayferrox 140, Fa. Bayer) |
| 0,2 | Dibutylzinnlaurat DBTL (Fa. Bayer) |
| | |

| | Polyisocyanatkomponente (B) |
|---|---|
| 63,5 | Caradate 30 ICI |
| 164 | |

Aus einer 2K- Kartusche (A:B = 100:63,2) erhielt man einen Schaum mit 30 g/l Raumgewicht.

### Beispiel 4: Neoprenschaumstoff

Zur Herstellung eines Neopren-Schaumstoffes wurden folgende Einsatzstoffe vermischt:

| Teile | Einsatzstoff |
|---|---|
| 180 | Neoprenkautschuk (Aquastik 1120; Fa. DuPont) |
| 6 | Emulgator (Rewopol B 1003; Fa. Degussa) |
| 0,5 | Silikonöl AK 350 (Fa. Wacker) |
| 150 | Dicyandiamid/Ammoniumpolyphosphat/Dipentaerythrit (1:2:1) |
| Summe 336,5 Teile | |

300 Teile dieser Mischung wurden mit 100 Teilen Dimethylether/Isobutan =1/1 in eine Druckdose mit Ventil gefüllt. Es wurde ein Schaumstoff mit 100 g/l Raumgewicht erhalten.

### Beispiel 5: Polyvinylalkoholschaumstoff

Zur Herstellung eines Polyvinylalkohol-Schaumstoffes wurden folgende Einsatzstoffe vermischt:

| Teile | Einsatzstoff |
|---|---|
| 30 | Polyvinylalkohol (MG = 14 000) |
| 5 | Glycerin |
| 190 | Wasser |
| 5 | Natriumdibromstearat |
| 40 | Ammoniumpolyphosphat |
| 40 | Trishydrazinotriazin |
| 40 | Pentaerythrit (Fa. Perstorp) |
| Summe 350 Teile | |

330 Teile dieser Mischung wurden mit 100 Teilen Dimethylether/Isobutan =1/1 in eine Druckdose mit Ventil gefüllt. Es wurde ein Schaumstoff mit 150 g/l Raumgewicht erhalten.

### Beispiel 6:

Zur Bestimmung der Brandwiderstandszeit wurden die Schaumstoffe aus Beispiel 1-5, sowie 3 herkömmliche Schaumstoffe (V1: 1K-Polyurethan (Intumex FS1); V2: 2K-Polyurethan(Intumex FS2), V3: 2K-Polyurethan(CP620, Fa. Hilti) in eine Fuge mit einem Verhältnis von Fugentiefe zu Fugenweite von 10 eingebracht. Es wurde der 2.Expansionsfaktor (EF) und die Brandwiderstandszeit bestimmt

| Schaumstoffe | Raumgewicht(g/l) | 2. EF | Brandwiderstandszeit (min) |
|---|---|---|---|
| V1:1K- Polyurethan | 45 | 0 | 120 |
| V2: 2K- Polyurethan | 50 | 0 | 130 |
| V3: 2K- Polyurethan | 200 | 0 | 120 |
| Beispiel 1 | 80 | 10 | 150 |
| Beispiel 2 | 500 | 5 | 220 |
| Beispiel 3 | 30 | 2 | 180 |
| Beispiel 4 | 100 | 2 | 200 |
| Beispiel 5 | 150 | 3 | 230 |

## Patentansprüche

1. Im Brandfall expandierende Weichschaumstoffe auf Basis von Styrol-Butadien, Polyvinylalkohol, Polyurethan oder Neopren, **dadurch gekennzeichnet, dass** sie als intumeszierende Komponente eine Kombination aus Phosphorsäureverbindung, Polyalkohol und Polyamid enthalten.

2. Im Brandfall expandierende Weichschaumstoffe auf Basis von Polyurethan nach Anspruch 1, **dadurch gekennzeichnet, dass** sie als Polyolkomponente (A) ein Polyol aus der Gruppe Polyethylenglykol, Polypropylenglykole, Polypropylenglykole mit Ethylenoxidendgruppen, Polyesterpolyole, Polybutadiene mit OH-Endgruppen, Polyole auf Phosphorsäureesterbasis oder halogenierte Polyetherpolyole, und als Polyisocyanatkomponente (B) Polyisocyanate aus der Gruppe der Methylendiphenyldiisocyanate, Tolylendiisocyanate, modifizierte Methylendiphenyldiisocyanate und Tolylendiisocyanate, Präpolymere von Methylendiphenyldiisocyanate und Tolylendiisocyanate, 4,4'-Diisocyanatodicyclohexyl-methan, Isophorondiisocyanat, Hexamethylendiisocyanat, 2,2,4(2,4,4)-Trimethyl-hexamethylendiisocyanat, hydriertes Toylendiisocyanat, Dimeryldiisocyanat, Lysindiisocyanat, trans-1,4-Cyclohexandiisocyanat, 1,4-Bis-iscocyanato-methylcyclo-hexan, Benzoldisulfonylisocyanat, Dibenzyoylisocyanat, Dihexylandiisocyanat 3,3'-Dimethyl-4,4'-diisocyanatdicyclohexylmethan, Tetramethylendiisocyanat, 2-Methylpentamethylendiisocyanat, Xylylendiisocyuanat enthalten, wobei das Verhältnis von Komponente A zu Komponente B bei 100: 30 bis 100: 80 liegt.

3. Im Brandfall expandierende Weichschaumstoffe auf Basis von Styrol-Butadien, Polyvinylalkohol, Polyurethan oder Neopren nach Anspruch 1, **dadurch gekennzeichnet, dass** als Phosphorsäureverbindung Phosphorsäureesterpolyole, Ammoniumpolyphosphat, Melaminphosphat, Ethylendiaminphosphat, Ammoniumdihydrogenphosphat, Aluminiumorthophosphat, Piperazinphosphat, Guanidinphosphat oder Harnstoffphosphat eingesetzt wird.

4. Im Brandfall expandierende Weichschaumstoffe auf Basis von Polyurethan oder nach Anspruch 1, **dadurch gekennzeichnet, dass** die Phosphorsäureverbindung Bestandteil der Polyolkomponente (A) ist, indem Polyole auf Basis von Phosphorsäureestern eingesetzt werden.

5. Im Brandfall expandierende Weichschaumstoffe auf Basis von Styrol-Butadien, Polyvinylalkohol, Polyurethan oder Neopren nach Anspruch 1, **dadurch gekennzeichnet, dass** als Polyalkohole Dipentaerythrit, Polyethylenglykol, Pentaerythrit, oder Polyole auf Phosphorsäureesterbasis eingesetzt werden.

6. Im Brandfall expandierende Weichschaumstoffe auf Basis von Styrol-Butadien, Polyvinylalkohol, Polyurethan oder Neopren nach Anspruch 1, **dadurch gekennzeichnet, dass** als Polyamid Melamin, Trishydrazinotriazin oder Dicyandiamid eingesetzt werden.

7. Im Brandfall expandierende Weichschaumstoffe auf Basis von Styrol-Butadien, Polyvinylalkohol, Polyurethan oder Neopren nach Anspruch 1, **dadurch gekennzeichnet, dass** die Phosphorsäureverbindung, der Polyalkohol und Melamin jeweils in einer Menge von 5 bis 50 Gew.% eingesetzt werden, wobei die Summe der eingesetzten Menge höchstens 75 Gew.% beträgt.

8. Im Brandfall expandierende Weichschaumstoffe auf Basis von Styrol-Butadien, Polyvinylalkohol, Polyurethan oder Neopren nach Anspruch 1, **dadurch gekennzeichnet, dass** sie Hilfs- und Zusatzstoffe aus der Gruppe Emulgatoren, Schaumstabilisatoren, Trocknungsmittel, Farbpigmente, Katalysatoren und Lösungsmittel enthalten.

9. Im Brandfall expandierende Weichschaumstoffe auf Basis von Styrol-Butadien, Polyvinylalkohol oder Neopren nach Anspruch 1, **dadurch gekennzeichnet, dass** die Schaumstoffe aus Einkomponentensprühdosen, -pistolen oder -kartuschen ausgebracht werden.

10. Im Brandfall expandierende Weichschaumstoffe auf Basis von Polyurethan nach Anspruch 1, **dadurch gekennzeichnet, dass** sie aus Zweikomponentensprühdosen, - pistolen oder -kartuschen ausgebracht werden, in denen die Polyol-Komponente und die Polyisocyanatkomponente bis zum Ausbringen reaktionsinhibierend getrennt vorliegen.

11. Im Brandfall expandierende Weichschaumstoffe auf Basis von Styrol-Butadien, Polyvinylalkohol, Polyurethan oder Neopren nach Anspruch 9 oder 10, **dadurch gekennzeichnet, dass** die Schaumstoffe direkt vor Ort in die zu verschließende Stelle eingebracht werden, wo sie zu einer Brandabschottung aufschäumen.

12. Im Brandfall expandierende Weichschaumstoffe auf Basis von Styrol-Butadien, Polyvinylalkohol, Polyurethan oder Neopren nach Anspruch 9 oder 10, **dadurch gekennzeichnet, dass** die Schaumstoffe nach dem Austritt aus den verwendeten Sprühdosen, -pistolen oder -kartuschen ein Raumgewicht zwischen 25 und 550 g/l aufweisen.

13. Im Brandfall expandierende Weichschaumstoffe auf Basis von Styrol-Butadien, Polyvinylalkohol, Polyurethan oder Neopren nach Anspruch 1, **dadurch gekennzeichnet, dass** der Expansionsfaktor beim Aufschäumen im Brandfall zwischen 1,5 und 15 liegt.

14. Verwendung von im Brandfall expandierenden Weichschaumstoffen auf Basis von Styrol-Butadien, Polyvinylalkohol, Polyurethan oder Neopren nach Anspruch 1, als Heißgasdichtung oder als wärmeisolierender Weichschott.
